# EUROPEAN PATENT APPLICATION

(11) **EP 4 844 033 A1**
(43) Date of publication of application: **25.11.2026**
(21) Application number: 26177409.5
(22) Date of filing: 08.05.2026
(51) Int. Cl.: C09D 1/00

(54) **SURFACE PROTECTION COATING**

(30) Priority: 20.05.2025 GB 202507859
(71) Applicant: Rolls-Royce plc, London N1 9FX (GB)
(72) Inventor: Arena, Gaetano, Derby, DE24 8BJ (GB); Pancholi, Bhavdeep, Derby, DE24 8BJ (GB); Redondo Cabrera, Clara, Derby, DE24 8BJ (GB); Norris, Christopher, Derby, DE24 8BJ (GB); Chitwan, Ravi, Derby, DE24 8BJ (GB)
(74) Representative: Rolls-Royce plc

(57) **Abstract**

A component for a gas turbine engine comprises: a substrate comprising fibre-reinforced composite material, the fibre-reinforced composite material comprising resin; a bond coating disposed on the substrate, the bond coating comprising metal; and a surface protection coating disposed on the bond coating, the surface protection coating comprising a ceramic or a cermet. The resin: (a) is a resin having a glass transition temperature no less than 200 degrees C; and/or (b) comprises at least one selected from the group consisting of cyanate ester resin, bismaleimide resin and polyimide resin.

## Description

### CROSS REFERENCE TO RELATED APPLICATIONS

This represents the first application directed towards the subject-matter.

### FIELD

This disclosure relates to surface protection coatings, components for gas turbine engines comprising surface protection coatings and associated methods of manufacture.

### BACKGROUND

Components of gas turbine engines may be exposed to extreme conditions during use. For example, dependent on the location within the engine, components may be subjected to one or more of high levels of mechanical loading, elevated or depressed temperatures, and corrosive, abrasive or erosive environments. Surface protection systems may be used to protect surfaces of gas turbine engine components against damage due to exposure to such environments. Surface protection systems can include erosion protection coatings such as polyurethane-based coatings.

### SUMMARY

In a first aspect, there is provided a component for a gas turbine engine, the component comprising: a substrate comprising fibre-reinforced composite material, the fibre-reinforced composite material comprising resin; a bond coating disposed on the substrate, the bond coating comprising metal; and a surface protection coating disposed on the bond coating, the surface protection coating comprising a ceramic or a cermet. The resin: (a) is a resin having a glass transition temperature no less than 200 degrees C; and/or (b) comprises at least one selected from the group consisting of cyanate ester resin, bismaleimide resin and polyimide resin.

The bond coating may predominantly comprise metal. For example, no less than 50 wt. %, for example, no less than 75 wt. %, or no less than 90 wt. %, of the bond coating may be metal. The bond coating may consist essentially of (e.g. consist of) metal.

The metal may be elemental metal or the metal may be metal alloy.

In an embodiment, the bond coating comprises at least one selected from the group consisting of nickel, cobalt, chromium, aluminium, platinum, and yttrium, or any combination thereof. The bond coating may comprise an alloy comprising two or more selected from the group consisting of nickel, cobalt, chromium, aluminium, platinum, and yttrium, or any combination thereof.

In an embodiment, the bond coating comprises aluminium.

The bond coating may predominantly comprise aluminium. For example, no less than 50 wt. %, for example, no less than 75 wt. %, or no less than 90 wt. %, of the bond coating may be aluminium. The bond coating may consist essentially of (e.g. consist of) aluminium.

The bond coating may predominantly comprise aluminium alloy. For example, no less than 50 wt. %, for example, no less than 75 wt. %, or no less than 90 wt. %, of the bond coating may be aluminium alloy. The bond coating may consist essentially of (e.g. consist of) aluminium alloy.

In an embodiment, the bond coating has a thickness no greater than 200 µm. The bond coating may have a thickness no greater than 150 µm, for example, no greater than 125 µm. The bond coating may have a thickness no less than 50 µm, for example, no less than 75 µm. The thickness of the bond coating may be uniform across the surface of the substrate. For example, the thickness of the bond coating may vary by no more than ± 10 µm across the surface of the substrate.

The bond coating may be disposed on the substrate such that the bond coating is directly in contact with the substrate. The bond coating may be disposed on the substrate such that the bond coating is directly in contact with material from which the substrate is formed.

The substrate may comprise a body of the component at least partially formed from the fibre-reinforced composite material. The body of the component may be predominantly formed from the fibre-reinforced composite material. The body of the component may comprise no less than 50 wt. %, for example, no less than 75 wt. %, or no less than 90 wt. %, of the fibre-reinforced composite material. The body of the component may consist essentially of (e.g. consist of) the fibre-reinforced composite material.

The substrate may predominantly comprise the fibre-reinforced composite material. For example, the substrate may comprise no less than 50 wt. %, for example, no less than 75 wt. %, or no less than 90 wt. %, of the fibre-reinforced composite material. The substrate may be formed from the fibre-reinforced composite material. The substrate may consist essentially of (e.g. consist of) the fibre-reinforced composite material.

In an embodiment, the substrate comprises one or more materials other than the fibre-reinforced composite material. For example, the substrate may comprise one or more layers or coatings provided over the body of the component. For example, the substrate may comprise one or more layers or coatings of polymeric material provided over the body of the component. The polymeric material may comprise a thermoplastic polymer or a thermosetting polymer. The polymeric material may comprise (e.g. be) polyimide.

The bond coating may be in direct contact with the fibre-reinforced composite material. For example, the bond coating may be in direct contact with the fibre-reinforced composite material of the component body. Alternatively, one or more other layers or coatings may be provided between the bond coating and the fibre-reinforced composite material (e.g. between the bond coating and the component body formed from the fibre-reinforced composite material). For example, one or more layers or coatings of polymeric material may be provided between the substrate and the bond coating. The bond coating may be disposed on the substrate such that the bond coating is directly in contact with the one or more layers or coatings of polymeric material.

The surface protection coating may predominantly comprise ceramic or cermet. For example, no less than 50 wt. %, for example, no less than 75 wt. %, or no less than 90 wt. %, of the surface protection coating may be ceramic or cermet. The surface protection coating may consist essentially of (e.g. consist of) ceramic or cermet.

In an embodiment, the surface protection coating comprises a cermet. The cermet may be a composite material comprising one or more ceramics and one or more metals. The cermet may comprise: (i) tungsten carbide (WC) or chromium carbide (Cr₃C₂); and (ii) at least one selected from the group consisting of cobalt (Co), chromium (Cr) and nickel (Ni), or any combination thereof. The cermet may comprise tungsten carbide (WC), cobalt (Co) and chromium (Cr). For example, the cermet may be a WC-Co-Cr cermet.

The surface protection coating may predominantly comprise the cermet. For example, no less than 50 wt. %, for example, no less than 75 wt. %, or no less than 90 wt. %, of the surface protection coating may be the cermet. The surface protection coating may consist essentially of (e.g. consist of) the cermet.

In an embodiment, the surface protection coating comprises a ceramic. The surface protection coating may predominantly comprise the ceramic. For example, no less than 50 wt. %, for example, no less than 75 wt. %, or no less than 90 wt. %, of the surface protection coating may be the ceramic. The surface protection coating may consist essentially of (e.g. consist of) the ceramic.

In an embodiment, the surface protection coating has a thickness no greater than 500 µm. The surface protection coating may have a thickness no greater than 400 µm, for example, no greater than 300 µm, or no greater than 200 µm, or no greater than 150 µm. The surface protection coating may have a thickness of less than 50 µm, for example, no less than 75 µm. The thickness of the surface protection coating across the substrate may be uniform. For example, the thickness of the surface protection coating may vary by no more than ± 10 µm across the substrate.

The surface protection coating may be disposed on the bond coating such that the surface protection coating is in direct contact with the bond coating.

In an embodiment, the bond coating and the surface protection coating are thermally sprayed coatings. The bond coating may be a flame sprayed coating (e.g. by wire flame spraying) or an arc sprayed coating (e.g. by twin wire arc spraying). The surface protection coating may be a high velocity oxygen fuel sprayed coating.

The fibre-reinforced composite material may comprise a fibre reinforcement and a matrix formed from the resin.

The resin may have a glass transition temperature (Tg) no less than 200 degrees C. That is to say, the resin may have a glass transition temperature which is 200 degrees C or more. The resin may have a glass transition temperature no less than 250 degrees C, or no less than 300 degrees C, or no less than 350 degrees C.

The glass transition temperature of the resin in the fibre-reinforced composite material may be measured by Dynamic Mechanical Analysis according to ASTM D7028-07 (2015).

It may be that the resin exhibits only one glass transition temperature. Alternatively, it may be that the resin exhibits two or more different glass transition temperatures. Accordingly, it may be that the resin has at least one glass transition temperature no less than 200 degrees C, or no less than 250 degrees C, or no less than 300 degrees C, or no less than 350 degrees C.

It may be that the resin has a glass transition temperature between 200 degrees C and 450 degrees C, for example, between 250 degrees C and 450 degrees C, or between 300 degrees C and 450 degrees C, or between 350 degrees C and 450 degrees C.

It will be appreciated that in this context, the term "resin" refers to the cured resin, i.e., the matrix material formed on curing the resin, rather than on a (e.g. liquid) resin precursor. It will therefore be understood that any reference to a glass transition temperature of the resin herein refers to a glass transition temperature of the cured resin, i.e. a cured glass transition temperature.

The resin may comprise at least one selected from the group consisting of cyanate ester resin, bismaleimide resin and polyimide resin.

The resin may comprise only one resin selected from the group consisting of cyanate ester resin, bismaleimide resin and polyimide resin. For example, the resin may comprise cyanate ester resin, or the resin may comprise bismaleimide resin, or the resin may comprise polyimide resin.

The resin may consist essentially of, consist of, or be, one resin selected from the group consisting of cyanate ester resin, bismaleimide resin and polyimide resin.

The resin may consist essentially of, consist of, or be, cyanate ester resin. The resin may consist essentially of, consist of, or be, bismaleimide resin. The resin may consist essentially of, consist of, or be, polyimide resin.

The resin may comprise two or more selected from the group consisting of cyanate ester resin, bismaleimide resin and polyimide resin. For example, the resin may comprise cyanate ester resin and bismaleimide resin. The resin may comprise cyanate ester resin and polyimide resin. The resin may comprise bismaleimide resin and polyimide resin.

In embodiments in which the resin comprises two or more (i.e. chemically) different resins (i.e. two or more different polymers), the two or more (i.e. chemically) different resins (i.e. polymers) may phase separate (for example, forming a sea-island structure) or the two or more (i.e. chemically) different resins may form an interpenetrating polymer network. The cyanate ester resin (also known as a dicyanate resin) may be selected from the group consisting of a bisphenol A cyanate ester resin, a bisphenol E cyanate ester resin, a bisphenol F cyanate ester resin and a novolac cyanate ester resin.

The polyimide resin may be aliphatic, semi-aromatic or aromatic. The polyimide resin may be thermoplastic (e.g. pseudothermoplastic) or thermosetting. The polyimide resin may be prepared by reaction between a dianhydride and a diamine or by reaction between a dianhydride and a diisocyanate.

It will be appreciated that the person skilled in the art of fibre-reinforced composite materials considers bismaleimide resins to form a separate class of resins from polyimide resins. Accordingly, for the purpose of this specification and the appended claims, the term "polyimide resin" is not considered to encompass bismaleimide resin. Accordingly, in embodiments in which the resin includes both bismaleimide resin and polyimide resin, it will be appreciated that the polyimide resin is a polyimide resin other than bismaleimide resin.

Cyanate ester resins may have a glass transition temperature no less than 200 degrees C, for example, no less than 250 degrees C, or no less than 300 degrees C. For example, cyanate ester resins may have a glass transition temperature between 200 degrees C and 350 degrees C.

Bismaleimide resins may have a glass transition temperature no less than 250 degrees C, for example, no less than 300 degrees C. For example, bismaleimide resins may have a glass transition temperature between 250 degrees C and 375 degrees C.

Polyimide resins may have a glass transition temperature no less than 250 degrees C, for example, no less than 300 degrees C. For example, polyimide resins may have a glass transition temperature between 200 degrees C and 450 degrees C.

In an embodiment, the fibre-reinforced composite material is a glass fibre-reinforced composite material comprising at least one selected from the group consisting of cyanate ester resin, bismaleimide resin and polyimide resin.

The fibre-reinforced composite material may be a glass fibre-reinforced composite material comprising cyanate ester resin. The fibre-reinforced composite material may be a glass fibre-reinforced composite material comprising bismaleimide resin. The fibre-reinforced composite material may be a glass fibre-reinforced composite material comprising polyimide resin.

The glass fibre-reinforced composite material may comprise E-glass fibres.

Alternatively, the fibre-reinforced composite material may comprise carbon fibres, aramid fibres or basalt fibres.

Accordingly, the fibre-reinforced composite material may be a carbon fibre-reinforced composite material comprising at least one selected from the group consisting of cyanate ester resin, bismaleimide resin and polyimide resin.

The component may be any component of a gas turbine engine suitable for manufacturing using fibre-reinforced composite materials.

The component may be a front frame or a stator vane.

In an embodiment, the component comprises: a substrate comprising a component body formed from fibre-reinforced composite material, the fibre-reinforced composite material comprising at least one selected from the group consisting of cyanate ester resin, bismaleimide resin and polyimide resin; the bond coating disposed on the substrate such that the bond coating is in direct contact with the fibre-reinforced composite material, the bond coating comprising metal; and the surface protection coating disposed on the bond coating, the surface protection coating comprising a cermet.

In an embodiment, the component comprises: a substrate comprising a component body formed from fibre-reinforced composite material, the fibre-reinforced composite material comprising at least one selected from the group consisting of cyanate ester resin, bismaleimide resin and polyimide resin; the bond coating disposed on the substrate such that the bond coating is in direct contact with the fibre-reinforced composite material, the bond coating comprising aluminium or aluminium alloy; and the surface protection coating disposed on the bond coating, the surface protection coating comprising a WC-Co-Cr cermet.

In an embodiment, the component comprises: a substrate comprising a component body formed from fibre-reinforced composite material, the fibre-reinforced composite material comprising at least one selected from the group consisting of cyanate ester resin, bismaleimide resin and polyimide resin, and one or more layers of another polymeric material (e.g. polyimide); the bond coating disposed on the substrate such that the bond coating is in direct contact with the one or more layers of another polymeric material, the bond coating comprising metal; and the surface protection coating disposed on the bond coating, the surface protection coating comprising a cermet.

In an embodiment, the component comprises: a substrate comprising a component body formed from fibre-reinforced composite material, the fibre-reinforced composite material comprising at least one selected from the group consisting of cyanate ester resin, bismaleimide resin and polyimide resin, and one or more layers of another polymeric material (e.g. polyimide); the bond coating disposed on the substrate such that the bond coating is in direct contact with the one or more layers of another polymeric material, the bond coating comprising aluminium or aluminium alloy; and the surface protection coating disposed on the bond coating, the surface protection coating comprising a WC-Co-Cr cermet.

In a second aspect, there is provided a gas turbine engine comprising the component according to the first aspect.

In a third aspect, there is provided a method of manufacturing a component for a gas turbine engine, the method comprising: providing a substrate comprising fibre-reinforced composite material, the fibre-reinforced composite material comprising resin; forming a bond coating on a surface of the substrate, the bond coating comprising metal; and forming a surface protection coating on a surface of the bond coating, the surface protection coating comprising a ceramic or a cermet. The resin: (a) has a glass transition temperature no less than 200 degrees C; and/or (b) comprises at least one selected from the group consisting of cyanate ester resin, bismaleimide resin and polyimide resin.

The method may be a method of manufacturing the component according to the first aspect. Accordingly, the method may have any features described hereinabove, *mutatis mutandis,* in relation to the first aspect.

In an embodiment, the method comprises thermally spraying bond coating material onto the surface of the substrate to form the bond coating.

The surface of the substrate may comprise the fibre-reinforced composite material. For example, the surface of the substrate may be a surface of the component body formed from the fibre-reinforced composite material, as described hereinabove. Accordingly, the method may comprise thermally spraying the bond coating material onto the fibre-reinforced composite material (e.g. thermally spraying the bond coating material onto a surface of the component body).

Alternatively, the surface of the substrate may comprise one or more layers or coatings of another polymeric material (e.g. a polyimide) and the method may comprise thermally spraying the bond coating material onto the one or more layers or coatings of the another polymeric material (e.g. the polyimide).

In an embodiment, the method comprises thermally spraying the bond coating material onto the surface of the substrate using flame spraying (e.g. wire flame spraying) or arc spraying (e.g. twin wire arc spraying).

The bond coating material may predominantly comprise metal. For example, no less than 50 wt. %, for example, no less than 75 wt. %, or no less than 90 wt. %, of the bond coating material may be metal. The bond coating material may consist essentially of (e.g. consist of) metal.

The metal may be elemental metal or the metal may be metal alloy.

In an embodiment, the bond coating material comprises at least one selected from the group consisting of nickel, cobalt, chromium, aluminium, platinum, and yttrium, or any combination thereof. The bond coating material may comprise an alloy comprising two or more selected from the group consisting of nickel, cobalt, chromium, aluminium, platinum, and yttrium, or any combination thereof.

In an embodiment, the bond coating material comprises aluminium.

The bond coating material may predominantly comprise aluminium. For example, no less than 50 wt. %, for example, no less than 75 wt. %, or no less than 90 wt. %, of the bond coating material may be aluminium. The bond coating material may consist essentially of (e.g. consist of) aluminium.

The bond coating material may predominantly comprise aluminium alloy. For example, no less than 50 wt. %, for example, no less than 75 wt. %, or no less than 90 wt. %, of the bond coating material may be aluminium alloy. The bond coating material may consist essentially of (e.g. consist of) aluminium alloy.

In an embodiment, the bond coating has a thickness no greater than 200 µm. The bond coating may have a thickness no greater than 150 µm, for example, no greater than 125 µm. The bond coating may have a thickness no less than 50 µm, for example, no less than 75 µm. The thickness of the bond coating may be uniform across the surface of the substrate. For example, the thickness of the bond coating may vary by no more than ± 10 µm across the surface of the substrate.

In an embodiment, the method comprises thermally spraying surface protection coating material onto the surface of the bond coating to form the surface protection coating.

In an embodiment, the method comprises thermally spraying the surface protection coating material onto the surface of the bond coating using high velocity oxygen fuel spraying.

In an embodiment, the surface protection coating material comprises a ceramic and a metal and the surface protection coating comprises a cermet.

In an embodiment, the surface protection coating material comprises: (i) tungsten carbide (WC) or chromium carbide (Cr₃C₂); and (ii) at least one selected from the group consisting of cobalt (Co), chromium (Cr) and nickel (Ni), or any combination thereof.

In an embodiment, the surface protection coating material comprises tungsten carbide (WC), cobalt (Co) and chromium (Cr). For example, the surface protection coating may be a WC-Co-Cr cermet.

In an embodiment, the surface protection coating has a thickness no greater than 500 µm. The surface protection coating may have a thickness no greater than 400 µm, for example, no greater than 300 µm, or no greater than 200 µm, or no greater than 150 µm. The surface protection coating may have a thickness of less than 50 µm, for example, no less than 75 µm. The thickness of the surface protection coating across the substrate may be uniform. For example, the thickness of the surface protection coating may vary by no more than ± 10 µm across the substrate.

In an embodiment, the method comprises subjecting the surface of the substrate to a surface treatment prior to forming the bond coating, wherein the surface treatment includes at least one selected from the group consisting of grit blasting, plasma treatment and chemical etching, or any combination thereof. The method may comprise subjecting the surface of the composite body (e.g. formed from the fibre-reinforced polymeric material) to the surface treatment. Alternatively, the method may comprise subjecting the one or more layers or coatings of another polymeric material, if present, to the surface treatment.

Grit blasting may be carried out using alumina grit. Grit blasting may be carried out using grit (e.g. alumina grit) having a mesh size no less than 20, for example, no less than no less than 30, or no less than 40. Grit blasting may be carried out using grit (e.g. alumina grit) having a mesh size no more than 140, for example, no more than 120, or no more than 100, or no more than 80, or no more than 60.

Plasma treatment may comprise cold atmospheric plasma treatment.

The surface treatment may be configured to increase the surface roughness of the surface prior to forming the bond coating.

The cyanate ester resin may be selected from the group consisting of a bisphenol A cyanate ester resin, a bisphenol E cyanate ester resin, a bisphenol F cyanate ester resin and a novolac cyanate ester resin.

The polyimide resin may be aliphatic, semi-aromatic or aromatic. The polyimide resin may be thermoplastic (e.g. pseudothermoplastic) or thermosetting. The polyimide resin may be prepared by reaction between a dianhydride and a diamine or by reaction between a dianhydride and a diisocyanate.

In an embodiment, the fibre-reinforced composite material is a glass fibre-reinforced composite material comprising at least one selected from the group consisting of cyanate ester resin, bismaleimide resin and polyimide resin. The glass fibre-reinforced composite material may comprise E-glass fibres. Alternatively, the fibre-reinforced composite material may comprise carbon fibres, aramid fibres or basalt fibres. Accordingly, the fibre-reinforced composite material may be a carbon fibre-reinforced composite material comprising at least one selected from the group consisting of cyanate ester resin, bismaleimide resin and polyimide resin.

### BRIEF DESCRIPTION OF THE DRAWINGS

Embodiments will now be described by way of example only with reference to the accompanying drawings, in which:
FIG. 1 shows a sectional side view of a gas turbine engine;
FIG. 2 shows a schematic cross-sectional view of a surface protection coating on a substrate;
FIG. 3 shows a flowchart of a method for manufacturing the surface protection coating shown in FIG. 2;
FIG. 4 shows a flowchart of a method for manufacturing the surface protection coating shown in FIG. 2;
FIG. 5 shows a schematic cross-sectional view of a surface protection coating on a second example substrate;
FIG. 6 shows a flowchart of a method for manufacturing the surface protection coating shown in FIG. 5;
FIG. 7 is a plot of average erosion rate at an impact angle of 20 degrees for various coated and uncoated samples;
FIG.8 is a plot of cumulative mass loss as a function of erodent interval up to 600 g at an impact angle of 20 degrees for various coated and uncoated samples;
FIG. 9 is a plot of cumulative mass loss to breakthrough at an impact angle of 20 degrees for various coated and uncoated samples;
FIG. 10 is a plot of thickness loss rate at breakthrough at an impact angle of 20 degrees for various samples;
FIG. 11 is a plot of average erosion rate at 100 g, 600 g and breakthrough erodent interval at an impact angle of 90 degrees for various coated and uncoated samples;
FIG.12 is a plot of cumulative mass loss as a function of erodent interval up to 600 g at an impact angle of 90 degrees for various coated and uncoated samples;
FIG. 13 is a plot of cumulative mass loss to breakthrough at an impact angle of 90 degrees for various coated and uncoated samples; and
FIG. 14 is a plot of thickness loss rate at breakthrough at an impact angle of 90 degrees for various coated and uncoated samples.

### DETAILED DESCRIPTION

### Gas turbine engines

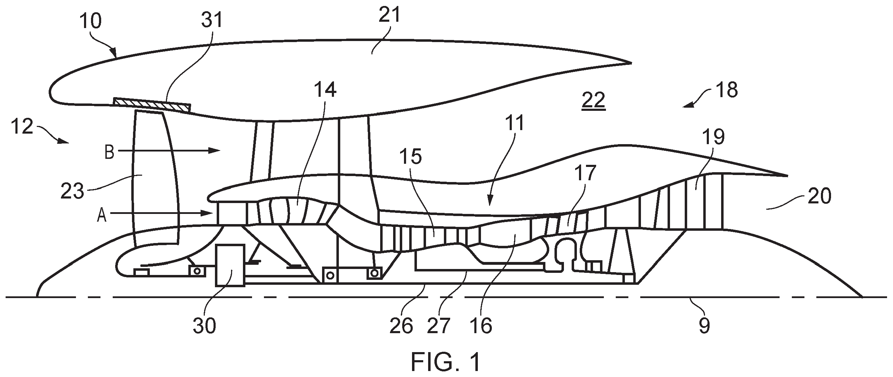

FIG. 1 illustrates an example gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30. A fan containment arrangement 31 extends around the fan 23 inboard the nacelle 21.

In use, the core airflow A is accelerated and compressed by the low pressure compressor 14 and directed into the high pressure compressor 15 where further compression takes place. Each compressor 14 and 15 includes one or more rows of rotor blades and one or more rows of stator vanes, which may be axially offset from each other. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

In this example, the low pressure compressor 14 includes a plurality of inlet guide vanes which regulate air flow into the compressor. The inlet guide vanes are supported by a front frame including a plurality of front frame struts which support a bearing for holding the shaft 26.

Many components of gas turbine engines are manufactured from metals. However, metal components are increasingly being replaced by composite components (such as components formed from fibre-reinforced polymeric materials) to reduce engine weight. Various gas turbine engine components (for example, the front frame and the stator vanes), however, may be subject in use to both elevated temperatures (for example, in excess of 150 degrees C) and impact and/or erosive forces (for example, due to hail and/or small foreign object impact). Composite components must therefore be carefully engineered to withstand such conditions.

### Surface protection coated composite components

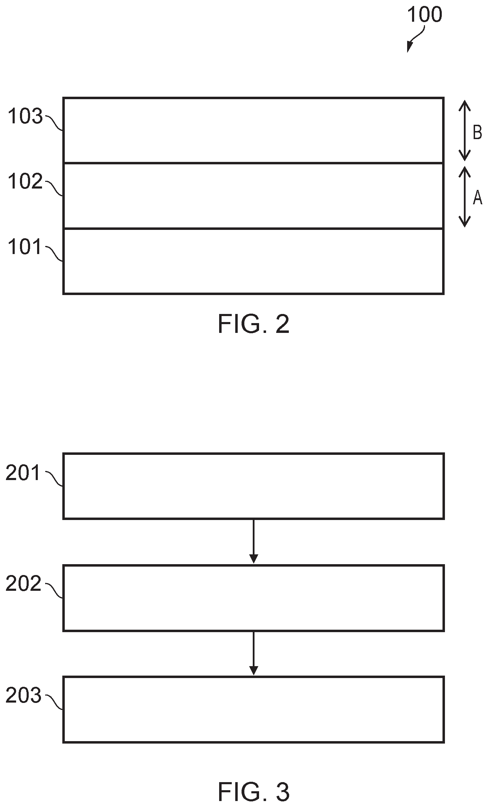

FIG. 2 shows a cross-sectional view of the surface of a composite gas turbine engine component 100.

The component 100 includes a substrate 101 formed from a cyanate ester based glass fibre reinforced plastic. The substrate 101 is a portion of the body of the component 100. The cyanate ester based glass fibre reinforced plastic includes an E-glass fibre reinforcement embedded in a cyanate ester resin matrix cured in an autoclave. Cyanate ester based fibre reinforced materials can withstand temperatures in excess of excess of 150 degrees C (for example, cyanate ester resins typically exhibit glass transition temperatures above 200 degrees C, or even above 300 degrees C).

The component 100 also includes a bond coating 102 disposed on the substrate 101 and a surface protection coating 103 disposed on the bond coating 102. In this example, the bond coating 102 is an aluminium alloy metallic bond coating with a uniform thickness A of 100 µm and the surface protection coating 103 is a thermally-sprayed coating of WC-Co-Cr cermet with a uniform thickness B of 100 µm. The surface protection coating 103 provides the component 100 with erosion resistance. The bond coating 102 assists with adhering the surface protection coating 103 to the substrate 101.

FIG. 3 illustrates a method for manufacturing the composite gas turbine engine component 100. The method includes: providing the substrate 101 (block 201); forming the bond coating 102 on the substrate 101 (block 202); and forming the surface protection coating 103 on the bond coating 102 (block 203).

In this example, the bond coating 102 is formed by twin wire arc spray (TWAS) forming. The bond coating is sprayed directly onto a surface of the substrate 101. The surface protection coating 103 is formed by high velocity oxygen fuel (HVOF) spraying.

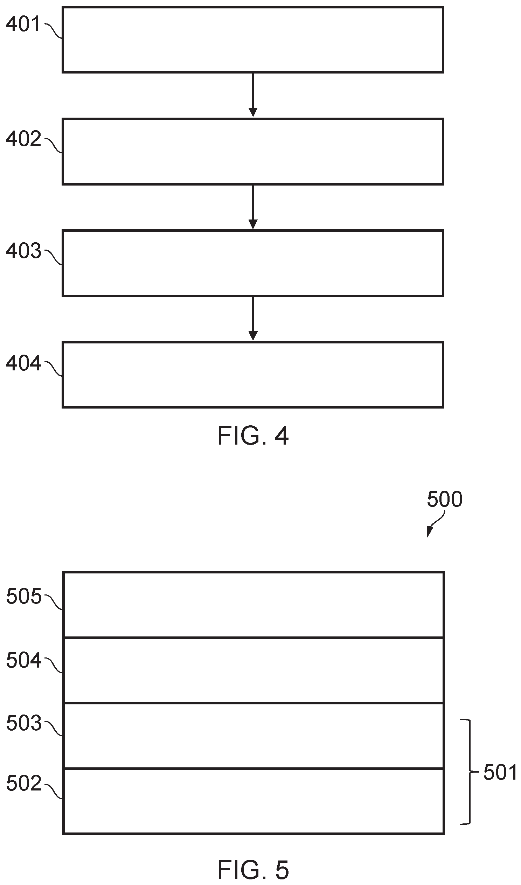

FIG. 4 illustrates a further method for manufacturing the composite gas turbine engine component 100. The method includes: providing the substrate 101 (block 401); subjecting a surface of the substrate 101 to a surface treatment (block 402); forming the bond coating 102 on the treated surface of the substrate 101 (block 403); and forming the surface protection coating 103 on the bond coating 102 (block 404).

In this example, the surface treatment 402 involves blasting the surface of the substrate 101 with alumina grit having a mesh size of 50. The bond coating 102 is again formed by twin wire arc spray (TWAS) forming. The bond coating is sprayed directly onto the grit-blasted surface of the substrate 101. The surface protection coating 103 is again formed by high velocity oxygen fuel (HVOF) spraying.

FIG. 5 shows a cross-sectional view of the surface of a further example composite gas turbine engine component 500.

The component 500 includes a substrate 501 made up of a portion of a cyanate ester based glass fibre reinforced plastic component body 502 and a coating of polyimide 503 disposed on an outer surface of the body 502.

The cyanate ester based glass fibre reinforced plastic includes an E-glass fibre reinforcement embedded in a cyanate ester resin matrix cured in an autoclave.

A bond coating 504 is disposed on the polyimide coating 503 and a surface protection coating 505 is disposed on the bond coating 504.

The polyimide coating 503 is made of a thermoplastic polyimide.

The bond coating 504 is an aluminium alloy metallic bond coating with a uniform thickness of 100 µm and the surface protection coating 505 is a thermally-sprayed coating of WC-Co-Cr cermet with a uniform thickness of 100 µm. The surface protection coating 505 provides the component 500 with erosion resistance. The bond coating 504 assists with adhering the surface protection coating 505 to the polyimide coating 503 formed on the body 502.

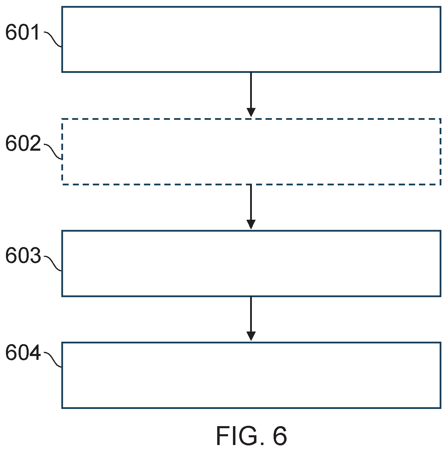

FIG. 6 illustrates a method for manufacturing the composite gas turbine engine component 500. The method includes: providing substrate 501 including the body 502 and the polyimide coating 503 (block 601); optionally subjecting a surface of the substrate 501 including the polyimide coating 503 to a surface treatment (block 602); forming the bond coating 504 on the treated surface (block 603); and forming the surface protection coating 505 on the bond coating 504 (block 604).

In this example, the surface treatment 602 involves blasting the surface of the substrate 501 including the polyimide coating 503 with alumina grit having a mesh size of 50. The bond coating 504 is formed by twin wire arc spray (TWAS) forming. The bond coating is sprayed directly onto the grit-blasted surface. The surface protection coating 505 is formed by high velocity oxygen fuel (HVOF) spraying.

The cyanate ester based composite material may be reinforced using any suitable type of fibre such as, for example, glass fibres (e.g. E-glass fibres), carbon fibres, aramid fibres or basalt fibres. The fibre reinforcement may be woven or non-woven, 2D or 3D. Different cyanate ester resin bonding systems may be used as appropriate, such as cyanate esters resins based on bisphenol A, bisphenol E, bisphenol F or novolac. A suitable example cyanate ester resin is the MTM^{®} 110 series ester matrix resin available from Solvay S.A. Alternatively, the cyanate ester resin bonding system could be replaced by any suitable resin bonding system capable of withstanding high temperatures, such as any resin having a glass transition temperature no less than 200 degrees C and/or a resin such as bismaleimide resin or polyimide resin.

The bond coating may be applied directly onto a fibre-reinforced composite body of the component, e.g. such that the bond coating is in direct contact with the composite material. Alternatively, the bond coating may be applied on top of one of or more other coatings or layers already present on the surface of the body.

The surface may be prepared by any suitable methods prior to forming the bond coating. For example, the surface may be cleaned prior to forming the bond coating. **In** addition, one or more surface treatments may be carried to prepare the surface for the bond coating. As described hereinabove, a surface treatment may include grit blasting the surface, for example, using alumina grit. However, additionally or alternatively, the surface treatment may include exposing the surface to plasma (for example, cold atmospheric plasma) or chemical etching. The surface treatment may increase the surface roughness and therefore enhance adhesion of the bond coating.

In the examples described hereinabove, the bond coating is formed from an aluminium alloy. However, it will be appreciated that any suitable metallic bond coating may be used. For example, the bond coating may be based on nickel, cobalt, chromium, platinum and/or yttrium.

The bond coating typically has a thickness of no more than 200 µm and no less than 50 µm. The thickness of the bond coating may have a variability within ± 10 µm across the surface of the substrate.

In the examples described hereinabove, the bond coating is formed by twin wire arc spray (TWAS) forming. However, it will be appreciated that any suitable thermal spraying method may be used. For example, the bond coating may be formed using wire flame spraying (WFS).

The surface protection coating may be applied directly onto a surface of the bond coating, e.g. such that the surface protection coating is in direct contact with the bond coating.

In the examples described hereinabove, the surface protection coating is formed from a WC-Co-Cr cermet. However, it will be appreciated that any suitable ceramic or cermet based surface protection coating may be used. For example, the surface protection coating may be based on WC-Co, Cr₃C₂-NiCr, WC-Ni-Cr or WC-Ni cermets.

The surface protection coating typically has a thickness of no more than 500 µm and no less than 50 µm. The thickness of the surface protection coating may have a variability within ± 10 µm across the substrate.

In the examples described hereinabove, the surface protection coating is formed by high velocity oxygen fuel (HVOF) spraying. However, it will be appreciated that any suitable thermal spraying method may be used.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

### Experimental Examples

Twelve different material samples were prepared to evaluate the bond tensile strength (TS) of bond coatings.

Three different substrate types were tested: substrate type 1 consisted of autoclave cured 2D woven 120 style E-glass reinforced MTM^{®} 100 prepreg panels (which include a cyanate ester resin matrix material); substrate type 2 consisted of autoclave cured 2D woven 120 style E-glass reinforced MTM^{®} 100 prepreg panels (which include a cyanate ester resin matrix material) including an additional layer of cyanate ester resin on a top surface; and substrate type 3 consisted of TECASINT^{®} 2011 polyimide (supplied by Ensinger plc).

The substrates were subjected to pre-coating surface treatments of either grit blasting with alumina grit having a mesh size of 80, or grit blasting with alumina grit having a mesh size of 80 followed by cold atmospheric plasma treatment using a PlasmaTact system available from Adtec Plasma Technology Co. Ltd.

Following surface treatment, the substrates were coated with a layer of aluminium alloy bond coat 300 µm thick using either a WFS or TWAS method. Less than 30 minutes elapsed between surface treatment and coating.

For each combination of substrate, surface treatment and coating methods, multiple specimens were prepared and the bond TS was measured in accordance with ASTM D7291 (2022). The results, averaged over 3 specimens per condition, are provided in Table 1.

**Table 1.**

| Substrate Type | Surface Treatment | Coating Method | Bond TS (MPa) |
|---|---|---|---|
| 1 | Grit | WFS | 7.10 |
| 1 | Grit | TWAS | 12.83 |
| 1 | Grit + plasma | WFS | 6.23 |
| 1 | Grit + plasma | TWAS | 11.00 |
| 2 | Grit | WFS | 5.11 |
| 2 | Grit | TWAS | 14.24 |
| 2 | Grit + plasma | WFS | 6.61 |
| 2 | Grit + plasma | TWAS | 7.72 |
| 3 | Grit | WFS | 9.65 |
| 3 | Grit | TWAS | 7.86 |
| 3 | Grit + plasma | WFS | 6.66 |
| 3 | Grit + plasma | TWAS | 5.83 |

Samples prepared using substrate types 1 and 3 were found to fail adhesively at the substrate-coating interface. Samples prepared using substrate type 2 were found to fail with a mixture of cohesive and adhesive failure.

Material samples were also prepared to evaluate the bond tensile strength (TS) of bond coatings and surface protection coatings in combination.

Again, the three different substrate types 1, 2 and 3 were tested.

The substrates were subjected to a pre-coating surface treatment of grit blasting with alumina grit having a mesh size of 80.

Following surface treatment, the substrates were coating with a layer of aluminium alloy bond coat 100 µm thick using either a WFS or TWAS method. Then a 100 µm thick surface protection coating of WC-Co-Cr cermet was deposited using HVOF spraying.

For each combination of substrate and coating method, 8 specimens were prepared and the bond TS was measured in accordance with ASTM D7291 (2022). The averaged results are provided in Table 2.

**Table 2.**

| Substrate Type | Coating Method | Bond TS (MPa) |
|---|---|---|
| 1 | WFS | 4.82 |
| 1 | TWAS | 7.36 |
| 2 | WFS | 6.03 |
| 2 | TWAS | 7.29 |
| 3 | WFS | 10.85 |
| 3 | TWAS | 8.33 |

Samples (of dimensions 70 mm by 40 mm) were prepared to evaluate the erosion resistance of the surface protection coatings. Erosion tests were carried out by grit blasting samples at room temperature at impact angles of 20 degrees and 90 degrees. The mass of each sample was measured prior to testing and then at every interval of 100 g of erodent used. The erosion rate for each sample was calculated at every interval of 100 g of erodent used. The erosion mass rate, ${E}_{M} \left[\frac{μg}{g}\right]$, was calculated as: ${E}_{M} \left[\frac{μg}{g}\right] = \frac{Initial {Mass}_{g} - Final {Mass}_{g}}{Mass of Blast {Media}_{g}} ⋅ {10}^{6}$

The results were compared to a baseline obtained by measuring the erosion rate for a sample (of dimensions 75 mm by 50 mm) of 6-AI-4-V titanium.

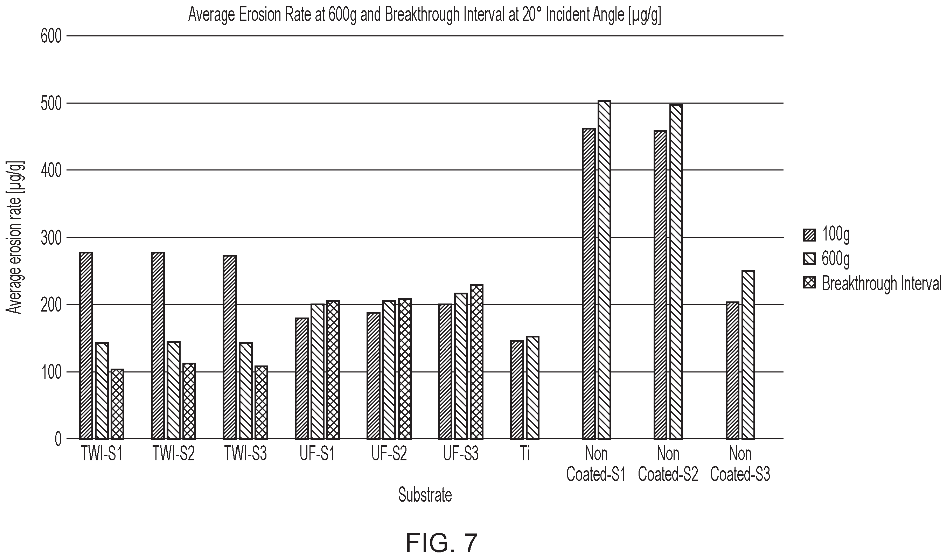

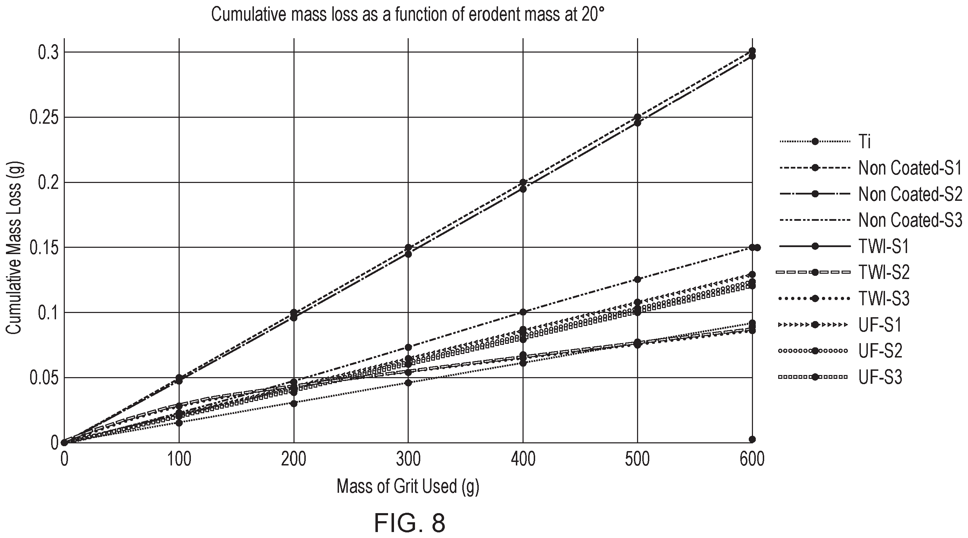

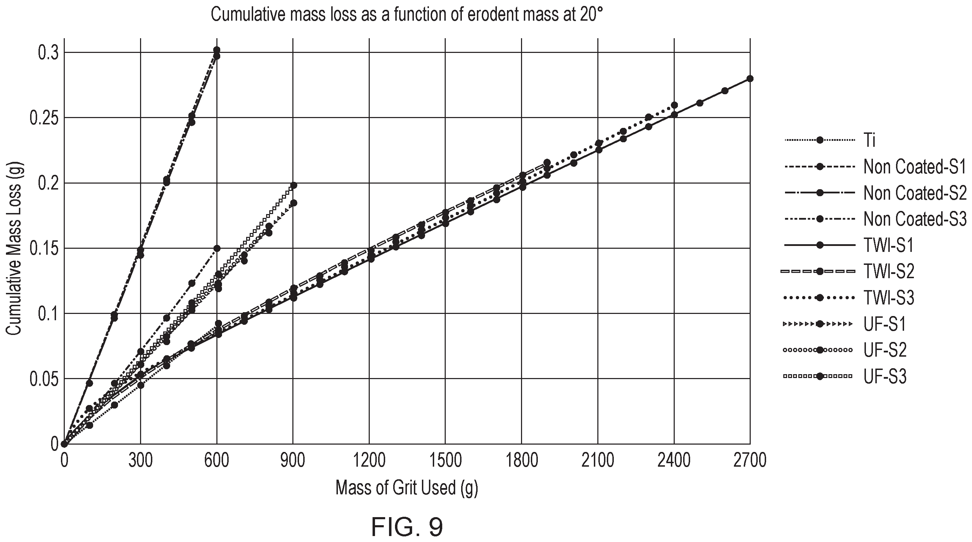

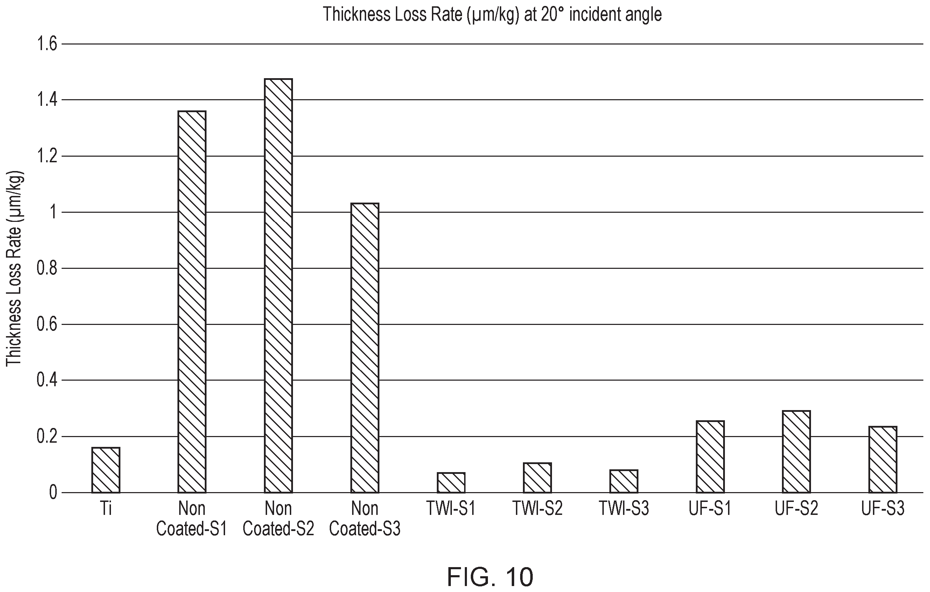

FIG. 7 shows the average erosion rate for each sample at an impact angle of 20 degrees. FIG. 8 shows the cumulative mass loss for each sample as a function of erodent interval up to 600 g at an impact angle of 20 degrees. FIG. 9 shows the cumulative mass loss for each sample to breakthrough at an impact angle of 20 degrees. FIG. 10 shows the thickness loss rate for each sample at breakthrough at an impact angle of 20 degrees.

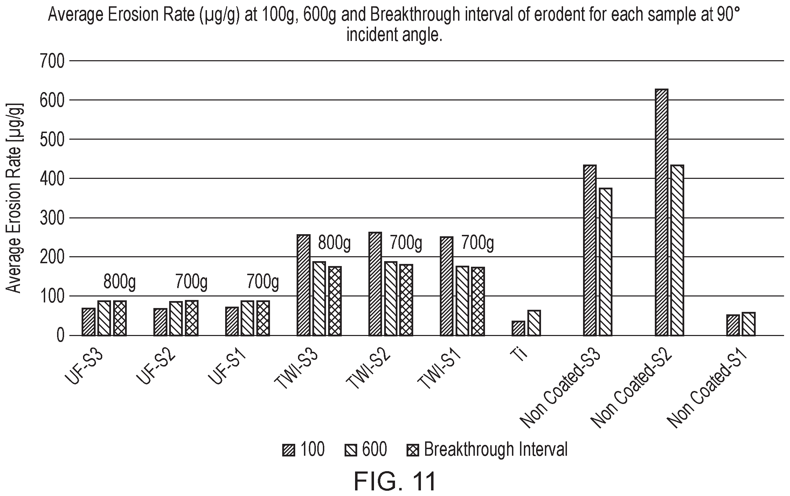

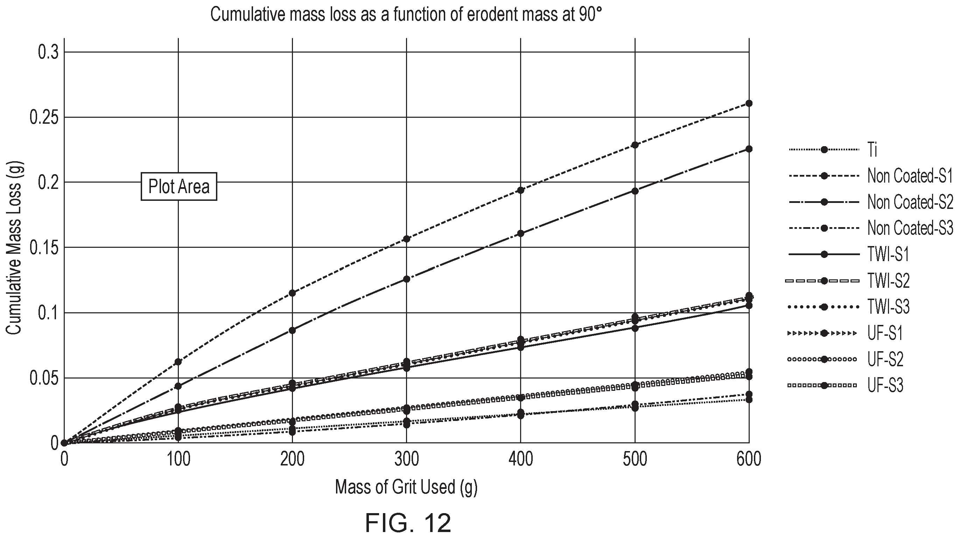

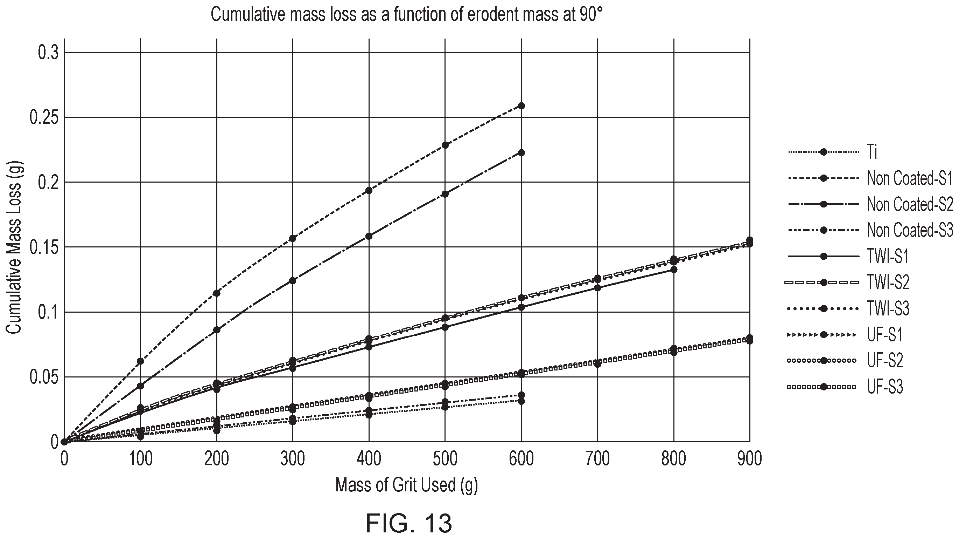

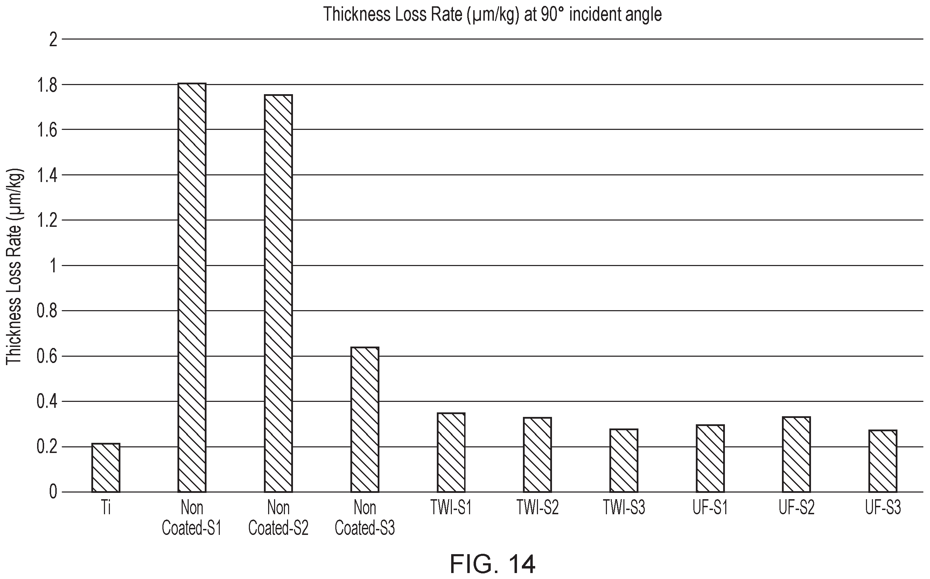

FIG. 11 shows the average erosion rate for each sample at 100 g, 600 g and breakthrough erodent interval at an impact angle of 90 degrees. FIG. 12 shows the cumulative mass loss for each sample as a function of erodent interval up to 600 g at an impact angle of 90 degrees. FIG. 13 shows the cumulative mass loss for each sample to breakthrough at an impact angle of 90 degrees. FIG. 14 shows the thickness loss rate for each sample at breakthrough at an impact angle of 90 degrees.

In FIG. 7 to FIG. 14, "TWI" refers to samples prepared with spray-coated WC-Co-Cr cermet surface protection coatings as described hereinabove. "S1" refers to samples prepared using substrate type 1, "S2" refers to samples prepared using substrate type 2, and "S3" refers to samples prepared using substrate type 3. "UF" refers to samples prepared using an alternative type of surface protection coating not discussed herein. "Ti" refers to the baseline sample of 6-AI-4-V titanium. "Non-Coated" refers to samples of substrate types 1, 2 and 3 without any surface protection system.

## Claims

1. A component for a gas turbine engine, the component comprising:
a substrate comprising fibre-reinforced composite material, the fibre-reinforced composite material comprising resin;
a bond coating disposed on the substrate, the bond coating comprising metal; and
a surface protection coating disposed on the bond coating, the surface protection coating comprising a ceramic or a cermet;
wherein the resin:
(a) is a resin having a glass transition temperature no less than 200 degrees C; and/or
(b) comprises at least one selected from the group consisting of cyanate ester resin, bismaleimide resin and polyimide resin.

2. The component according to claim 1, wherein the bond coating comprises at least one selected from the group consisting of nickel, cobalt, chromium, aluminium, platinum, and yttrium, or any combination thereof.

3. The component according to claim 2, wherein the bond coating comprises aluminium.

4. The component according to any preceding claim, wherein the bond coating has a thickness no greater than 200 µm.

5. The component according to any preceding claim, wherein the surface protection coating comprises a cermet.

6. The component according to claim 5, wherein the cermet comprises:
(i) tungsten carbide (WC) or chromium carbide (Cr₃C₂); and
(ii) at least one selected from the group consisting of cobalt (Co), chromium (Cr) and nickel (Ni), or any combination thereof.

7. The component according to claim 6, wherein the cermet comprises tungsten carbide (WC), cobalt (Co) and chromium (Cr).

8. The component according to any preceding claim, wherein the surface protection coating has a thickness no greater than 500 µm.

9. The component according to any preceding claim, wherein the bond coating and the surface protection coating are thermally sprayed coatings.

10. The component according to any preceding claim, wherein the fibre-reinforced composite material is a glass fibre-reinforced composite material comprising at least one selected from the group consisting of cyanate ester resin, bismaleimide resin and polyimide resin.

11. A gas turbine engine comprising the component according to any preceding claim.

12. A method of manufacturing a component for a gas turbine engine, the method comprising:
providing a substrate comprising fibre-reinforced composite material, the fibre-reinforced composite material comprising resin;
forming a bond coating on a surface of the substrate, the bond coating comprising metal; and
forming a surface protection coating on a surface of the bond coating, the surface protection coating comprising a ceramic or a cermet;
wherein the resin:
(a) has a glass transition temperature no less than 200 degrees C; and/or
(b) comprises at least one selected from the group consisting of cyanate ester resin, bismaleimide resin and polyimide resin.

13. The method according to claim 12, wherein the method comprises thermally spraying bond coating material onto the surface of the substrate to form the bond coating.

14. The method according to claim 13, wherein the method comprises thermally spraying the bond coating material onto the surface of the substrate using flame spraying or arc spraying.

15. The method according to claim 13 or claim 14, wherein the bond coating material comprises at least one selected from the group consisting of nickel, cobalt, chromium, aluminium, platinum, and yttrium, or any combination thereof.
